Europäisches Patentamt

(19) European Patent Office

Office européen des brevets

(11) Veröffentlichungsnummer: **0 001 453**
A1

## (12) EUROPÄISCHE PATENTANMELDUNG

(21) Anmeldenummer: 78101108.5

(22) Anmeldetag: 09.10.78

(51) Int. Cl.²: **A 47 J 31/057**

(30) Priorität: 12.10.77 DE 2745959

(43) Veröffentlichungstag der Anmeldung: 18.04.79
Patentblatt 79/8

(84) Benannte Vertragsstaaten: CH FR GB NL SE

(71) Anmelder: WÜRTTEMBERGISCHE
METALLWARENFABRIK, Postfach 76, D-7340
Geislingen/Steige (DE)

(72) Erfinder: Anderl, Siegfried, Lerchenweg 13, D-7341
Amstetten (DE)

(74) Vertreter: Patentanwälte Dipl.-Ing. A. Grünecker, Dr.-
Ing. H. Kinkeldey, Dr.-Ing. W. Stockmair,, Dr. rer. nat.
K. Schumann, Dipl.-Ing. P. Jakob, Dr. rer. nat. G.
Bezold Maximilianstrasse 43, D-8000 München 22 (DE)

(54) **Kaffeemaschine.**

(57) Bei einer Kaffeemaschine mit einem beheizbaren, druckdichten Wasserkessel (1), von dem ein Steigrohr (10) zu einer Austragsleitung (11) führt, wird das heiße Wasser nach Aufbau eines Überdrucks im Wasserkessel (1) zur Filterkammer (12) gepreßt. Bei einer solchen Kaffeemaschine kann es vorkommen, daß das unter Druck stehende Wasser auf Temperaturen von weit über 100°C erhitzt wird, was die Kaffeequalität mindert. Dieses Problem wird durch Unterteilung des Wasserkessels (1) in einen die Heizung (8) und das Steigrohr (10) enthaltenden Heißwasserbehälter (2) und einen wenigstens etwa das halbe Volumen des Heißwasserbehälters (2) aufweisenden Kaltwasserbehälter (3), der mit dem Heißwasserbehälter (2) oben und unten verbunden ist, gelöst. Die Verbindung (4, 5) ist so beschaffen, daß beim Auspressen des Heißwassers genügend kaltes Wasser nachfließt, um die gewünschte Obergrenze der Heißwassertemperatur nicht zu überschreiten.

ACTORUM AG

9. Okt. 1978

Württembergische Metallwarenfabrik
Postfach 76
7340 Geislingen (Steige)

Kaffeemaschine

Die Erfindung betrifft eine Kaffeemaschine mit einem druckdichten Wasserkessel, einer darin angeordneten Heizung, einer
zu einer Filterkammer führenden Austragsleitung, einem vom
Bodenbereich des Wasserkessels zur kesselseitigen Öffnung der
Austragsleitung führenden Steigrohr, durch das das heiße Wasser
nach Aufbau eines Überdruckes im Wasserkessel zur Filterkammer
gepreßt wird.

Bei derartigen Kaffeemaschinen wird in den im Ruhezustand leerer
Wasserkessel zur Getränkebereitung die notwendige Wassermenge
jeweils frisch eingefüllt und erhitzt. Im Interesse eines einfachen und preiswerten Maschinenaufbaus werden für die Wassererhitzung Heizkörper mit konstanter (nicht regelbarer) Leistung
verwendet. Um eine kurze Aufheizzeit des Brühwassers zu erreich werden überwiegend starke Heizungen eingesetzt. Beim Überschreiten des Siedepunktes bildet durch das Steigrohr zur Filterkammer und durch das Brühgut drückt. Dabei besteht die Gefahr, daß die abnehmende und fortlaufend beheizte Wassermenge im Wasserkessel Temperaturen weit über 100°C erreicht. Diese Erscheinung tritt besonders dann auf, wenn bei feinstgemahlenem Brühgut die Durchflußgeschwindigkeit des Brühwassers vermindert ist. Durch das Brühen mit überhitztem Wasser werden im Kaffeemehl außer den gewünschten Aroma- und Farbstoffen auch Bitterstoffe in zu großer Menge freigesetzt, so daß diese den Geschmack des fertigen Kaffees in erheblichem Maße beeinträchtigen. Für das Liefern eines guten Kaffees ist es erforderlich, einen vorgegebenen Temperatur- und Druckverlauf bei der Zubereitung in der Maschine sicherzustellen, wobei die maximal erreichte Temperatur gewisse Höchstwerte nicht überschreiten darf.

Es sind bereits verschiedene Vorschläge gemacht worden, wie eine zu hohe Wasserüberhitzung verhindert werden kann. Es ist eine Kaffeemaschine der eingangs beschriebenen Art bekannt (OS 15 79 502), welche zusätzlich zu der in der Filterkammer über dem Brühgut mündenden Austragsleitung eine das Brühgut umgehende, zur Ausflußöffnung der Filterkammer führende Nebenleitung aufweist. In der Nebenleitung ist ein Überdruckventil angeordnet, das bei Erreichen eines bestimmten Druckes im Wasserkessel zunächst Dampf, bei weiterem Druckanstieg von einer bestimmten Druckhöhe an auch heißes Wasser austreten läßt. Diese bekannte Kaffeemaschine ist somit von aufwendiger Bauart und durch das Überdruckventil störanfällig. Ferner hat sie den Nachteil, daß nur ein Teil des Brühwassers durch das Brühgut fließt, während der überheizte Rest direkt in das Auffanggefäß fließt. Bei ungünstigen Durchflußverhältnissen, insbesondere bei zu fein gemahlenem Brühgut, kann das Verhältnis von Kaffeebrühe zu klarem Wasser sich so ungünstig gestalten, daß ein zu dünnes Getränk entsteht. Durch unkontrolliertes
Abführen des Dampfes ändert sich ferner spürbar die vorgewählte Wassermenge; in größeren Mengen austretender Dampf
wirkt ferner durch Feuchtigkeit und Geräusche oft sehr störend.

Aufgabe der vorliegenden Erfindung ist es, eine Kaffeemaschine
der eingangs beschriebenen Art zu schaffen, die bei einfachem
Aufbau einen Druck- und Temperaturverlauf während des Brühvorganges ermöglicht, welcher eine einwandfreie Kaffeequalität
gewährleistet, bei dem keine Veränderung der vorgewählten Menge
durch Dampfverluste erfolgt, keine Beeinträchtigung der Umgebung durch abblasenden Dampf verursacht wird und die Erwärmung des Wassers in möglichst kurzer Zeit erfolgt.

Die Aufgabe wird erfindungsgemäß dadurch gelöst, daß der Wasserkessel unterteilt ist in einen die Heizung und das Steigrohr enthaltenden Heißwasserbehälter und einen wenigstens etwa das halbe
Volumen des Heißwasserbehälters aufweisenden Kaltwasserbehälter,
der mit dem Heißwasserbehälter durch einen Anschluß im oberen
Kesselbereich und einen Anschluß im bodennahen Bereich derart
kommunizierend verbunden ist, daß beim Auspressen des Heißwassers kaltes Wasser in einer Menge nachfließt, daß die Höchsttemperatur des Heißwassers einen vorgegebenen Wert, von beispiels
weise 105°C nicht überschreitet, wobei der bodennahe Anschluß im wesentlichen drosselfrei, jedoch so eng ausgebildet
ist, daß ein Eindringen von warmem Wasser in den Kaltwasserbehälter durch Konvektion im wesentlichen verhindert ist.

Die erfindungsgemäße Kaffeemaschine ermöglicht einen vorteilhaft
frühen Beginn des Brühvorganges, da zunächst nur die in Heißwasserbehälter vorhandene Wassermenge auf den Siedepunkt zu erhitzen ist. Erst wenn die Zuleitung zur Filterkammer beginnt,
also der Wasserspiegel im Heißwasserbehälter zu sinken beginnt, strömt kaltes Wasser aus dem Kaltwasserbehälter nach. Dieses vermischt sich im boden- und damit heizungsnahen Bereich mit dem aufgeheizten Wasser, so daß die fortdauernde Heizleistung zum Erwärmen dieses Gemisches verbraucht wird. Eine Überhitzung des heißen Wassers wird damit wirkungsvoll verhindert, insbesondere auch dadurch, daß sich die im Heißwasserbehälter vorhandene Wassermenge nicht im Maße des Brühverbrauches verringert, sondern langsamer, abhängig von den jeweiligen Wasserflächen, also Querschnitten beider Wasserbehälter. Auch dadurch wird der Temperaturanstieg des Wassers bei gleicher Heizleistung niedriger gehalten. All dies gewährleistet eine Brühtemperatur, welche den Kaffeegeschmack nicht durch das Lösen von Bitterstoffen gefährdet. Die niedrigere Wassertemperatur und der niedrigere Höchst-Dampfdruck in der erfindungsgemäßen Kaffeemaschine haben weiter den Vorteil, daß weniger Kesselstein ausfällt, und daß, auch durch die Unterteilung in zwei kleinere Wasserbehälter, dünnere Kesselbleche verwendet werden und der gesamte Kessel einfacher aufgebaut sein kann. Auch die gesamte Herstellungszeit für den Kaffee wird niedriger, da die Anheizzeit bis zu Beginn des Brühvorganges durch die zunächst zu erhitzende kleinere Wassermenge kürzer wird.

Ein weiterer, wesentlicher Vorteil der erfindungsgemäßen Kaffeemaschine besteht darin, daß sowohl durch die Wahl des Volumenverhältnisses zwischen Heiß- und Kaltwasserbehälter, als auch durch die Form des Kaltwasserbehälters für den Brühvorgang ein bestimmter Druck- und Temperaturverlauf über die Brühzeit gewählt und festgelegt werden kann. Ein Kaltwasserbehälter, der über seine ganze Höhe eine etwa gleichbleibende Querschnittsfläche aufweist, liefert in den Heißwasserbehälter eine linear der Absinkhöhe, d.h. -geschwindigkeit, entsprechende Kaltwassermenge. Bei einem Kaltwasserbehälter mit über seine Höhe unterschiedlichen Querschnittsflächen ändert sich dementsprechend auch die Menge des in den Heißwasserbehälter nachfließenden Kaltwassers. Wenn sich der Wasserspiegel im Kaltwasserbehälter im Bereich großer Querschnittsflächen befindet, wird relativ mehr, im Bereich kleiner Querschnittsflächen relativ weniger Kaltwasser nachgespeist. Bei einem Kaltwasserbehälter, dessen Querschnitte sich von unten nach oben verjüngen, werden die höchsten Brühwassertemperaturen zu Beginn des Brühvorganges auftreten, da in diesen Zeitbereich der Wasserspiegel im Kaltwasserbehälter im Bereich der kleinen Querschnitte absinkt. Die Brühwassertemperatur nimmt zum Ende des Brühvorganges hin, entsprechend der stärkeren Kaltwassernachlieferung, ab. Bei Verwendung eines Kaltwasserkessels, dessen Querschnitt sich von oben nach unten verjüngt, steigt die Brühwassertemperatur vom Beginn des Brühvorganges an nur langsam an, da zunächst aus dem Kaltwasserbehälter relativ viel Wasser in den Heißwasserbehälter nachfließt. Diese Lieferung wird zunehmend weniger, so daß sich gegen Ende des Brühvorganges im Heißwasserbehälter eine höhere Wassertemperatur einstellen kann. Da der Geschmack des fertigen Kaffees vom Druck- und Temperaturverlauf während des Brühvorganges in hohem Maße abhängig ist, können regional verschiedene Anforderungen an den Kaffeegeschmack auf einfache Weise durch die Wahl eines nach Form und Größe bestimmten Kaltwasserbehälters befriedigt werden.

Weitere Einzelheiten der Erfindung sowie der damit erzielbaren Vorteile gehen aus der nachstehenden Beschreibung von in den Zeichnungen dargestellten Ausführungsbeispielen hervor. Es zeiger

Fig. 1 einen leicht schematisierten Schnitt durch eine erfindungsgemäße Kaffeemaschine;

Fig. 2 in kleinerem Maßstab und stark schematisiert weitere Ausführungsformen von Kaffeemaschinen, und

Fig. 3 Temperatur-Zeitdiagramme für die Ausführungsformen nach Fig. 2, und

Fig. 4 eine weitere Ausführungsform.

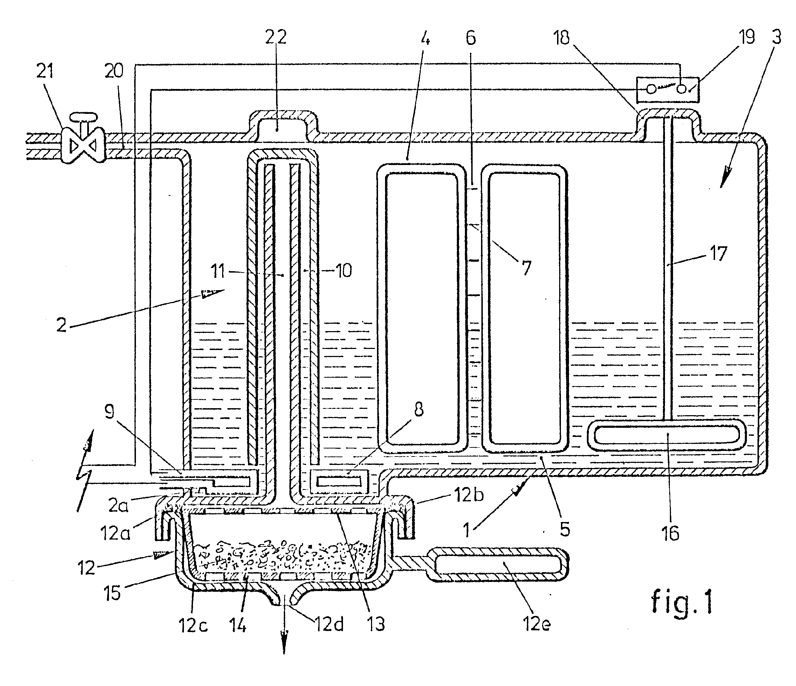

Die in Fig. 1 dargestellte Kaffeemaschine weist ein als Ganzes mit 1 bezeichnetes druckdichtes Kesselgehäuse auf. Es enthält einen Heißwasserbehälter 2 und einen Kaltwasserbehälter 3. Die beiden Behälter sind miteinander kommunizierend verbunden durch einen Anschluß 4 im oberen Kesselbereich und einen bodennahen Anschluß 5. Zwischen den beiden Wasserbehältern ist außerdem ein Wasserstandsanzeigerohr 6 oben und unten mit den Anschlüssen 4 und 5 derart verbunden, daß sein Inhalt ebenfalls mit dem Inhalt der beiden Wasserbehälter kommuniziert. Ihm ist eine Skala 7 zugeordnet, die in Tassen geeicht ist.

Der Heißwasserbehälter 2 enthält in seinem, gegenüber dem übrigen Kesselboden vertieften, Bodenbereich 2a eine schematisch angedeutete Heizung 8. Sie ist mittels die Kesselwand abgedichtet durchsetzenden Leitungen an einen elektrischen Anschluß 9 angeschlossen. Ferner enthält der Heißwasserbehälter etwa zentrisch ein Steigrohr 10, das oben geschlossen ist und die vertikale Austragsleitung 11 umgibt. Die Austragsleitung 11 führt durch den Boden des Heißwasserbehälters zu einer als Ganzes mit 12 bezeichneten Filterkammer. Diese wird von einem die Mündung der Austragsleitung umgebenden Deckel 12a und einem, mittels einer Dichtung 12b, druckdicht ansetzbaren Siebträger 12c gebildet. Der Siebträger 12c enthält ein Wasserverteilersieb 13 im oberen und ein Brühsieb 14 in seinem unteren Bereich, auf welch letzteres das Brühgut 15 aufgebracht wird. Die fertige Kaffeebrühe verläßt die Filterkammer durch eine Ausflußöffnung 12d. Dem Siebträger ist zur leichteren Betätigung beim Füllen und Entleeren ein Handgriff 12e zugeordnet.

Der Kaltwasserbehälter 3 enthält einen Schwimmer 16, der über eine Stange 17 und eine druckdichte Übertragung 18 auf einen Niveausteuerschalter 19 einwirkt. Der Niveauschalter 19 ist mit dem elektrischen Anschluß 9 für die Heizung 8 verbunden. Die Anordnung sorgt für das Ein- und/oder Ausschalten der Heizung bei bestimmten Füllständen, also auch als Trockengehschutz. Das Füllen des Wasserkessels erfolgt über eine Zuleitung 20, die ein Ventil 21 enthält.

Mit der geschilderten Kaffeemaschine erfolgt die Kaffeebereitung wie folgt: Auf das Brühsieb 14 des abgenommenen Siebträgers 12c wird das Brühgut 15,abgemessen für die vorgesehene Tassenzahl, gegeben und der Siebträger 12c an den Deckel 12a angesetzt. Über die Zuleitung 20 wird frisches Wasser in den Wasserkessel geleitet. Es steigt im Heiß- und Kaltwasserbehälter sowie im Wasserstandsanzeigerohr 6 gleichmäßig hoch. Die Wasserzufuhr wird gestoppt, wenn die Skala 7 die gewünschte Tassenzahl anzeigt. Bereits beim Beginn der Füllung wird der Schwimmer 16 angehoben und betätigt über die druckdichte Verbindung 18 den Schalter 19, welcher die Heizung 8 einschaltet. Das Wasser im Heißwasserbehälter 2 wird durch die Heizung aufgeheizt, während der Inhalt des Kaltwasserbehälters kühl bleibt. Beim Erreichen der Siedetemperatur bildet sich über dem Wasserspiegel Dampf, der zunächst Luft aus dem Wasserkessel über ein nicht gezeichnetes Entlüftungsventil 22 drückt und dieses bei stärkerer Dampfentwicklung schließt. Durch die fortdauernde Beheizung steigt die Wassertemperatur und der Dampfdruck an. Vom Erreichen eines bestimmten Überdruckes an wird heißes Wasser durch das Steigrohr 10 nach oben und durch die Austragsleitung 11 in die Filterkammer 12 und durch das Brühgut 15 gedrückt. Aus der Ausflußöffnung 12d fließt die Kaffeebrühe in ein unterzustellendes Gefäß ab. Durch das Ausströmen des Wassers beginnt der Wasserspiegel im Heißwasserbehälter zu sinken. Durch die kommunizierende Verbindung mit dem Kaltwasserbehälter und dem Wasserstandsanzeigerohr strömt aus diesem Bereich durch den bodennahen Anschluß 5 kaltes Wasser in den Heißwasserbehälter nach. Es vermischt sich im bodennahen Bereich des Heißwasserbehälters, also in der Nähe der Heizung 8, mit dem dortigen, leicht überhitzten Wasser. Die fortdauernd aufgebrachte Heizleistung wird somit im wesentlichen dazu verbraucht, das nachströmende, kühle Wasser aufzuheizen. Die gesamte Wassertemperatur in Heißwasserkessel kann somit nicht oder nur unwesentlich weiter ansteigen. Versuche haben ergeben, daß die Temperatur entsprechend der gewählten Größenverhältnisse zwischen Heiß- und Kaltwasserbereiter sowie deren geometrischer Form eine bestimmte Temperatur von beispielsweise 105°C nicht übersteigt. Da durch die Leitungen un Armaturen eine weitere Abkühlung eintritt, ist sichergestellt, daß das Brühgut nicht von überhitztem Wasser durchflossen wird, das die Getränkequalität nachteilig beeinträchtigen könnte. Da das Wasserniveau im Kaltwasserbehälter im gleichen Maße wie das Wasserniveau im Kaltwasserbehälter absinkt, ist gewährleistet, daß der absinkende Schwimmer die Heizung über den Niveauschalter 19 rechtzeitig ausschaltet, d.h. wenn die tieferliegende Heizung noch vom Wasser bedeckt ist. Sie kann auf diese Weise nicht durchbrennen. Durch das Fehlen von Kesselstein im Kaltwarmbehälter ist eine zuverlässige Arbeitsweise der Niveauregelung gewährleistet. Zuletzt strömt durch das Steigrohr Dampf in die Filterkammer und trocknet das Brühgut. Der Siebhalter kann nach Beendigung des Brühvorganges abgenommen und das weitgehend getrocknete Brühgut leicht entfernt werden. Auf Wunsch kann sich sofort ein neuer Brühvorgang anschließen.

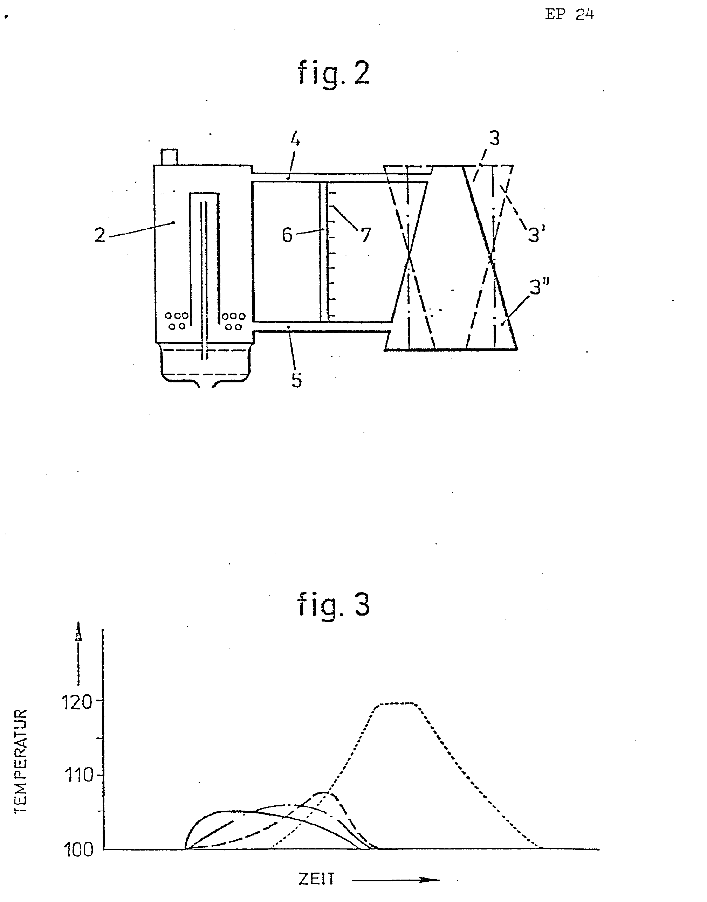

Fig. 2 zeigt stark schematisiert Ausführungsformen der erfindungsgemäßen Kaffeemaschine, bei welchen durch besondere Formen des Kaltwasserbehälters bestimmte Druck- bzw. Temperaturverläufe während des Brühvorganges erzielbar sind. Fig. 2 zeigt strichpunktiert einen Kaltwasserbehälter 3 mit durchgehend gleichem Querschnitt, etwa Fig. 1 entsprechend, einen Kaltwasserbehälter 3' (gestrichelte Linie), dessen Querschnitt sich von unten nach oben vergrößert, und einen Kaltwasserbehälter 3" (durchgezogene Linie), dessen Querschnitt sich von unten nach oben verjüngt. Das Diagramm Fig. 3 zeigt die den jeweiligen Behälterformen entsprechenden Temperaturverläufe während der Brühzeit, jeweils in der gleichen Liniengestalt. Die Aufzeichnung umfaßt dabei den Zeitraum vom Brühbeginn an, d.h. beim Ansteigen der Wassertemperatur über 100°C, wo die Druckbildung beginnt, und endet beim Abfallen der Temperatur unter 100°C, d.h. wenn das Wasser verbraucht und durch Ausströmen von Dampf der Druckausgleich erreicht ist. In punktierter Darstellung ist zum Vergleich die Temperaturkurve angedeutet, wie sie sich ohne das Vorhandensein eines Kaltwasserbehälters ergibt.

Bei einer Kaffeemaschine mit einem Kaltwasserbehälter 3 mit
über die ganze Höhe gleichbleibendem Querschnitt ergibt sich
eine Temperaturkurve für das Brühwasser, die annähernd sinusförmig verläuft (strichpunktierte Linie). Vom Siedepunkt ab
steigt die Temperaturkurve etwa proportional der Zeit an, wobei ein Großteil der Heizleistung zunächst für den Aufbau des
zum Ausdrücken des Wassers notwendigen Dampfdrucks verbraucht
wird. Sobald das Brühwasser aus dem Heißwasserkessel in das
Steigrohr gepreßt wird, fließt Kaltwasser entsprechend dem Querschnittsverhältnis zwischen Heiß- und Kaltwasserbehälter nach,
bei etwa gleichen Querschnitten also etwa halb so viel Kaltwasser
als insgesamt Heißwasser ausgebracht wird. Der größte Teil der
Heizleistung wird damit verbraucht, dieses Wasser auf die Temperatur des übrigen Wassers zu erhitzen, der verbleibende Rest
ergibt eine langsame Erhöhung der Wassertemperatur, die nach
mehr als der Hälfte der gesamten Brühzeit etwa 105$^o$C erreicht.
Darüber hinaus steigt die Temperatur nicht an, da ein Teil der
Heizleistung auch zur Dampferzeugung verbraucht wird, da dem
Dampf entsprechend dem verringerten Wasservolumen im gesamten
Wasserkessel ein größerer zu füllender Raum zur Verfügung steht.
Nach etwa zwei Dritteln der Brühzeit ist der größte Teil des
Brühwassers bereits verbraucht. Der Schwimmer im Kaltwasserbehälter schaltet die Heizung ab. Der aufgebaute Dampfdruck
reicht aus, das restliche Wasser durch das Steigrohr zu drücken,
wobei die Nachwärme der abgeschalteten Heizung ausreicht, ein
zu rasches Absinken der Temperatur des Gemisches zu verhindern. Die Temperatur sinkt langsam ab, auch das letzte ausgebrachte Brühwasser weist noch etwa 100$^o$C auf.

Bei einer Kaffeemaschine mit einem Kaltwasserbehälter, dessen
Querschnitt sich von oben nach unten verjüngt, ergibt sich ein
anderer Temperaturverlauf über die Brühzeit (gestrichelte Linie)
Sobald kurz nach Erreichen der Siedetemperatur ein ausreichender
Dampfdruck im Wasserkessel aufgebaut ist und das heiße Wasser
auszuströmen beginnt, wird im Heißwasserbehälter ein relativ
großer Prozentsatz des verlorenen Heißwasservolumens aus dem Kaltwasserbehälter ersetzt. Die konstante Heizleistung kann
somit die Gesamttemperatur nur in geringem Maße erhöhen, über
fast die Hälfte der Brühzeit steigt die Temperatur des Brühwassers nur sehr langsam an. Der Prozentsatz des nachfließenden
Kaltwassers zum verbrauchten Brühwasser sinkt jedoch ständig
durch den abnehmenden Querschnitt des Kaltwasserbehälters.
Etwa von der halben Brühzeit an steigt daher die Wassertemperatur zunehmend stärker, erreicht ihren ebenfalls bei etwa 105°C
liegenden Höhepunkt trotzdem jedoch später als dies bei gleichmäßigen Kaltwassernachschub der Fall ist, praktisch gegen Ende
der Heizzeit. Das Brühgut wird also am Ende des Brühvorganges
vom heißesten Wasser des Brühvorganges durchlaufen.

Etwa spiegelbildlich zu den eben geschilderten Brühvorgang zeigt sich der Temperaturverlauf des Brühwassers über der
Brühzeit bei einer Kaffeemaschine mit einem Kaltwasserbehälter,
dessen Querschnitt sich von oben nach unten verbreitert. Bei
Beginn des Brühvorganges, d.h. sobald das heiße Wasser durch
das Steigrohr auszutreten beginnt, strömt ein sehr geringer
Prozentsatz Kaltwasser im Vergleich zu der ausgetragenen Wassermenge nach. Das Wasser im Heißwasserbehälter wird somit zu Beginn des Brühvorganges stark erhitzt, die höchste, etwa bei
105°C liegende Brühwassertemperatur wird kurz nach Beginn des
Brühvorganges erreicht, das Brühgut wird zunächst von besonders
heißem Wasser durchströmt. Anschließend nimmt die Wassertemperatur langsam, aber stetig ab, da in steigendem Maße das verbrauchte Brühwasser durch kaltes Wasser ersetzt wird. Schon vor
Ende des Brühvorganges nähert sich die Temperatur des Brühwassers von oben her stark an die Siedetemperatur an.

Die zum Vergleich eingezeichnete Kurve einer Kaffeemaschine
ohne Kaltwasserbehälter (punktierte Linie) zeigt die wesentlichen Unterschiede und damit Vorteile der erfindungsgemäßen
Kaffeemaschine: Zunächst setzt der Brühvorgang mit einer erheblichen Zeitverschiebung ein, dadurch bedingt, daß die gesamte Wassermenge in dem einzigen vorhandenen Behälter zunächst

- 11 -

0001453

insgesamt auf die Siedetemperatur von 100°C erhitzt werden muß. Die Temperatur des Brühwassers steigt gleichmäßig und relativ steil an, da die Heizleistung zu einem Teil für die Erhöhung des Dampfdruckes, im wesentlichen aber zur Weitererhitzung der abnehmenden Wassermenge dient. Die Wassertemperatur steigt bis zu 120°C an, wobei diese Begrenzung nach oben dadurch gegeben ist, daß inzwischen auch der Dampfdruck eine Höhe erreicht hat, die ein Ablaßventil betätigt. Nach Abschalten der Heizung sinkt die Temperatur etwa in gleichem Verhältnis ab, wie sie angestiegen ist, es muß jedoch dabei berücksichtigt werden, daß es sich dabei um das Austragen einer relativ kleinen restlichen Wassermenge handelt, die bis zuletzt noch erheblich heißer als 100°C ist. Das Brühgut wird also über den größten Teil der Brühzeit hinweg von stark überhitztem Wasser durchflossen, was sich auf die Qualität des Getränkes nachteilig auswirkt.

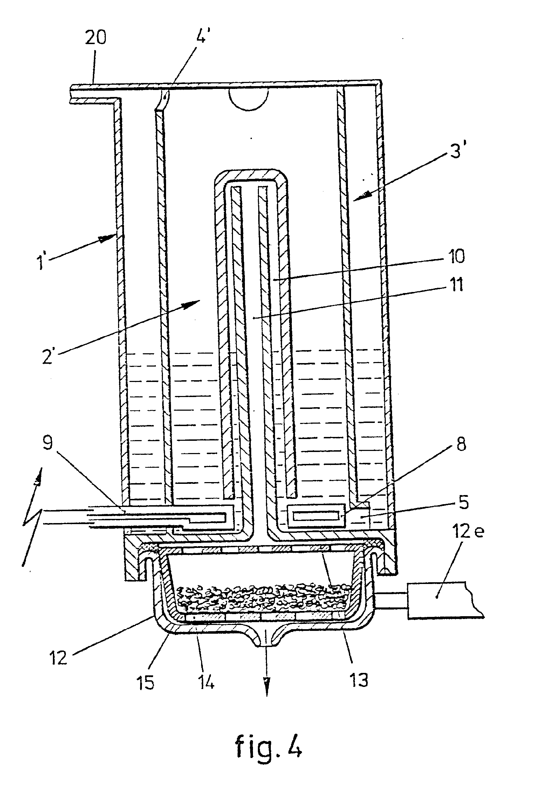

Fig. 4 zeigt eine weitere Ausführungsform einer Kaffeemaschine, die sich von der in Fig. 1 gezeigten Kaffeemaschine dadurch unterscheidet, daß sich der Heißwasserbehälter 2' innerhalb des Kaltwasserbehälters 3' befindet. Im folgenden wird nur auf die gegenüber der Ausführungsform nach Fig. 1 wesentlich geänderten Bauteile eingegangen. Ihre Bezugszeichen sind in Fig. 4 mit einem ' versehen. Das Gehäuse 1' ist kleiner und kompakter ausgebildet und bildet im wesentlichen die Wandung des Kaltwasserbehälters 3'. Die Anschlüsse 4' im oberen Kesselbereich und 5' in Bodennähe, welche den inneren Heißwasserbehälter 2' mit dem ihn umgebenden Kaltwasserbehälter 3' verbinden, sind im wesentlichen als Durchbrechung der Wandung des Heißwasserbehälters 2' ausgebildet. Die Ausführungsform nach Fig. 4 ist baulich vorteilhaft, platzsparend und außerdem energiesparend, da der Kaltwasserbehälter eine zusätzliche Isolierung des Heißwasserbehälters darstellt. Auf eine nochmalige Darstellung eines Schwimmers und einer Wasserstandsanzeige wurde in Fig. 4 verzichtet; sie kann in üblicher Form angebracht werden, die Wasserstandsanzeige auch durch ein Fenster im Kaltwasserbehälter ersetzt werden.

Die Erfindung ist nicht auf die Ausführungsbeispiele beschränkt. Die schematisch dargestellten Formen und Verbindungen zwischen dem Heiß- und Kaltwasserbehälter können im Rahmen der Erfindung variieren. Insbesondere besteht die Möglichkeit, den bodennahen Anschluß des Kaltwasserbehälters an den Heißwasserbehälter so zu gestalten, daß das nachströmende Kaltwasser so nahe an die Steigrohröffnung herangeführt wird; daß ein Teil des kühlen Wassers ohne vorherige Aufheizung direkt mit dem heißen Wasser in das Steigrohr gedrückt wird und so das zum Brühgut gelangende Wasser direkt abkühlt.

Die Querschnittsänderungen des Kaltwasserbehälters müssen nicht, wie schematisch dargestellt, stetig sein, sie können auch sprunghaft erfolgen und/oder über die Höhe gegensinnig verlaufen, d.h. der Kaltwasserbehälter kann eine mittlere Ausbuchtung oder eine mittlere Einschnürung aufweisen. Derselbe unterschiedliche Kühleffekt des Brühwassers kann auch durch Querschnittsveränderungen des Heißwasserkessels erreicht werden. Ferner kann in die Verbindungsleitung eine verstellbare Drossel eingebaut werden, mit der ein verzögertes Nachlaufen des Kaltwassers und damit niedrigere Endtemperaturen erreicht werden.

Der Siebträger muß nicht unmittelbar unten am Heißwasserbehälter angeordnet sein, sondern an beliebiger Stelle - auch oberhalb des Kessels. Ferner ist im Rahmen der Erfindung auch ein Heißwasserkessel ohne Steigrohr mit direkt durch Schwerkraftwirkung ausfließendem Wasser und entsprechend angeordneter Filterkammer möglich. Ferner kann der Kaltwasserbehälter und/oder der Heißwasserbehälter wenigstens teilweise durchsichtig ausgebildet werden und damit das gesonderte Wasserstandsanzeigerohr entfallen.

9. Okt. 1978

Anmelder: Württembergische
Metallwarenfabrik, Geislingen / Steige

P a t e n t a n s p r ü c h e

1. Kaffeemaschine mit einem druckdichten Wasserkessel, einer
darin angeordneten Heizung, einer zu einer Filterkammer führenden Austragsleitung, einem vom Bodenbereich des Wasserkessels zur kesselseitigen Öffnung der Austragsleitung führenden Steigrohr, durch das das heiße Wasser nach Aufbau
eines Überdruckes im Wasserkessel zur Filterkammer gepreßt
wird, d a d u r c h  g e k e n n z e i c h n e t , daß
der Wasserkessel unterteilt ist in eine die Heizung (8) und
das Steigrohr (10) enthaltenden Heißwasserbehälter (2) und
einen wenigstens etwa das halbe Volumen des Heißwasserbehälters aufweisenden Kaltwasserbehälter (3), der mit dem Heißwasserbehälter durch einen Anschluß (4) im oberen Kesselbereich und einen Anschluß (5) im bodennahen Bereich derartig
kommunizierend verbunden ist, daß beim Auspressen des Heißwassers kaltes Wasser in einer Menge nachfließt, daß die
Höchsttemperatur des Heißwassers einen vorgegebenen Wert, von t
spielsweise 105°C, nicht überschreitet, wobei der bodennahe
Anschluß (5) im wesentlichen drosselfrei, jedoch so eng ausgebildet ist, daß ein Eindringen von warmem Wasser in den
Kaltwasserbehälter durch Konvektion im wesentlichen verhindert ist.

2. Kaffeemaschine nach Anspruch 1, d a d u r c h   g e k e n n -
z e i c h n e t , daß der Kaltwasserbehälter (3) etwa das
gleiche Volumen wie der Heißwasserbehälter (2) aufweist.

3. Kaffeemaschine nach Anspruch 1 und 2, d a d u r c h   g e -
k e n n z e i c h n e t , daß der Kaltwasserbehälter (3) im
wesentlichen über seine ganze Höhe gleichen Querschnitt aufweist.

4. Kaffeemaschine nach Anspruch 1 und 2, d a d u r c h   g e -
k e n n z e i c h n e t , daß der Kaltwasserbehälter (3) im
wesentlichen über seine ganze Höhe veränderlichen Querschnitt
aufweist.

5. Kaffeemaschine nach Anspruch 4, d a d u r c h   g e k e n n -
z e i c h n e t , daß der Kaltwasserbehälter (3") mit von unten
nach oben kleiner werdendem Querschnitt ausgebildet ist.

6. Kaffeemaschine nach Anspruch 4, d a d u r c h   g e k e n n -
z e i c h n e t , daß der Kaltwasserbehälter (3') mit sich
von unten nach oben vergrößerndem Querschnitt ausgebildet ist.

7. Kaffeemaschine nach wenigstens einem der Ansprüche 1 bis 6,
d a d u r c h   g e k e n n z e i c h n e t , daß der Kaltwasserbehälter (3) eine Trockengehschutz-Schaltung (16 bis 19)
enthält.

8. Kaffeemaschine nach wenigstens einem der Ansprüche 1 bis 7,
d a d u r c h   g e k e n n z e i c h n e t , daß der Kaltwasserbehälter (3) eine Wasserstandsanzeige (6) aufweist.

0001453

9. Kaffeemaschine nach wenigstens einem der Ansprüche 1 bis 8, dadurch g e k e n n z e i c h n e t, daß der Heißwasserbehälter in wesentlichen über seine ganze Höhe veränderlichen Querschnitt aufweist.

10. Kaffeemaschine nach wenigstens einem der Ansprüche 1 bis 9, dadurch g e k e n n z e i c h n e t, daß die untere Verbindungsleitung (5) aus schlecht wärmeleitendem Material besteht.

11. Kaffeemaschine nach wenigstens einem der Ansprüche 1 bis 10, dadurch g e k e n n z e i c h n e t, daß der Heißwasserbehälter (2') etwa zentrisch in dem Kaltwasserbehälter (3') angeordnet ist.

fig.1

1/3

0001453

fig. 2

fig. 3

fig. 4

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.³) |
|---|---|---|---|
| X | FR - A - 1 410 016 (SIEMENS)<br>* Seite 1, Spalte 2 bis Seite 2, Spalte 1; Fig. 1 *<br><br>-- | 1,3,7<br>10,11 | A 47 J 31/057 |
| - | FR - A - 590 077 (R. COUSIN)<br>* Seite 2, Zeilen 33 bis 43; Fig. *<br><br>-- | 1,3 | |
| - | US - A - 3 220 334 (BUNN-O-MATIC)<br>* Spalte 1, Zeile 52 bis Spalte 2, Zeile 34; Fig. 2 *<br><br>-- | 1,4,6,<br>7 | **RECHERCHIERTE SACHGEBIETE (int. Cl.²)**<br><br>A 47 J 31/00<br>A 47 J 31/04<br>A 47 J 31/057<br>A 47 J 31/10 |
| - | DE - A - 1 579 506 (SIEMENS)<br>* Ansprüche 1 bis 3; Fig. *<br><br>-- | 1,3 | |
| D | DE - A - 1 579 502 (SIEMENS)<br><br>---- | | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 21-12-1978 | MASSALSKI |

EPA form 1503.1 06.78